# EUROPEAN PATENT SPECIFICATION

(11) **EP 1 146 316 B1**
(45) Date of publication and mention of the grant of the patent: **13.04.2005**
(21) Application number: 01302788.3
(22) Date of filing: 26.03.2001
(51) Int. Cl.: G01C 21/36, G10L 15/00

(54) **Navigation system**
Navigationssystem
Système de navigation

(30) Priority: 14.04.2000 JP 2000114244
(43) Date of publication of application: 17.10.2001
(73) Proprietor: Alpine Electronics, Inc., Tokyo (JP)
(72) Inventor: Satoh, Kouichi, Shinagawa-ku, Tokyo (JP)
(74) Representative: Kensett, John Hinton

(56) References cited:
- WO-A-01/04790
- DE-A- 19 717 601
- US-B1- 6 243 675
- LAMEL L F ET AL: "Language identification using phone-based acoustic likelihoods" ACOUSTICS, SPEECH, AND SIGNAL PROCESSING, 1994. ICASSP-94., 1994 IEEE INTERNATIONAL CONFERENCE ON ADELAIDE, SA, AUSTRALIA 19-22 APRIL 1994, NEW YORK, NY, USA,IEEE, 19 April 1994 (1994-04-19), pages I-293-I-296, XP010133535 ISBN: 0-7803-1775-0

## Description

The present invention relates to navigation systems for displaying a map of the vicinity of a user's vehicle and guiding an end-user along a traveling route by speech.

Generally navigation systems installed in vehicles find the current position of the vehicle and read map data of its vicinity from a data storage medium such as CD or DVD to display the data on a screen. A vehicle position mark indicating the position of the vehicle is displayed on the screen. The map data on the vicinity is scrolled in accordance with traveling of the vehicle such that this vehicle position mark is always at the center of the screen and map information of the vicinity of the vehicle is always understood.

Most of the latest vehicle-installed-type navigation systems are provided with a route-guiding function that enables end-users to travel to desired destinations without getting lost. According to this route-guiding function, the least-cost route establishing a connection between a starting position and a destination position is automatically searched for using map data by performing a simulation, such as a breadth-first search (BFS) method or Dijkstra's algorithm. The searched route is stored as a guiding route. During driving, the screen is displayed so that the guiding route is shown by bold lines of a different color from the colors used for the other roads, and the next intersection the vehicle will approach is enlarged, and the end-users are guided to the destination by speech-guiding output.

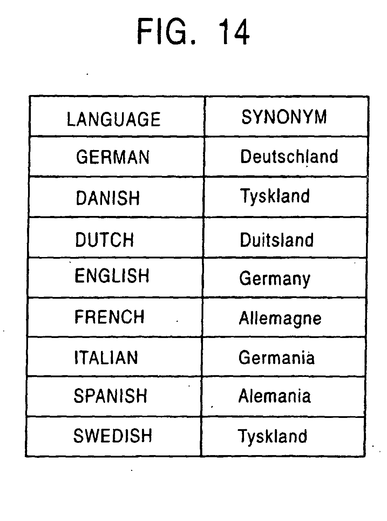

Since a language used in the above-described conventional navigation system is fixed at the time of the purchase, when the actual language used by the end-user and the language used in the navigation system are different, the end-user may be unable to understand the contents of the displayed map and the output guiding speech. For example, when a foreigner uses a Japanese-specification navigation system purchased in Japan, characters contained in the map and the speech guiding are in Japanese even for an end-user using e.g. English. When the end-user crosses borders of countries in Europe or the like when using the navigation system in which the map indicated with the local language of each country is used, the end-user finds it difficult to understand the contents. Fig. 14 shows how, for example, a synonym (notation) of the name "GERMAN" is different for each country.

The present invention is made considering the above-described points and the object thereof is to provide a navigation system facilitating the end-user's understanding of the display contents, regardless of the language used by the end-user.

In order to solve the foregoing problem, a navigation system according to the present invention causes a speech-recognition unit to perform speech recognition processing on input speech while causing a language-determining unit to determine the language used by a speaker based on this recognition result. Navigation processing corresponding to this determined language.to used is performed by a navigation-processing unit. Since the navigation processing unit performs a predetermined navigation operation which considers the language used by the speaker (end-user), the end-user can easily understand displaying and output speech obtained by the navigation operation.

In particular, the above navigation processing is provided with a map displaying unit displaying map information of the vicinity of the vehicle. The map displaying unit preferably uses the language used determined by the language determining unit as the language of characters contained in map information that is a target displayed. By causing the characters contained in the map information to be matched with the language used by the end-user, the contents of the map information can be easily understood.

When the above navigation processing unit is provided with a route-searching unit and a route-guiding unit, the route-guiding unit preferably generates guiding speech corresponding to the language used. Since the guiding speech using the language used is generated, the end-user can catch the contents clearly.

Preferably, by examining the language corresponding to each word contained in the input speech, the above language determining unit determines the language with majority in this examined result as the language used. Even in a case in which the mother language and imported words are mixed, the mother language, which is more frequently used, can be determined as the language used.

Preferably, the above language determining unit includes a database storing the feature for each end-user extracted in the examination and determines the language used for each end-user. Since the feature of each end-user is reflected on determination of the language used, determination accuracy can be increased.

When an image of a captured predetermined road guiding board is input and an image recognition unit for determining the contents of the characters contained in this image is further provided, preferably, the navigation processing unit includes a guiding unit for performing at least one of displaying and speech-outputting obtained by replacing the characters, whose contents are determined by the image recognition unit, with other characters which are in the language used determined by the language determining unit and which have the same meaning as the characters. Even though the contents of the road guiding use the local language notation and the language used in the guiding is different from the language used by the end-user, the contents of the guide can be understood positively.

Preferably, transmission of detailed information dependent on the language used by the language determining unit is requested by a transmission request unit and the detailed information transmitted in accordance with this request from the outside is received by an information receiving unit. Since only information required for determining the language used needs to be provided, the amount of information corresponding to each of the languages to be used can be decreased. The amount of storage medium can be reduced, which can achieve cost saving. In addition, since the amount of information that can be stored is restricted, by decreasing the amount of information that must be always stored corresponding to each of the languages, the number of languages to be used that are targets to be determined can be increased.

Further objects, features and advantages of the present invention will become apparent from the following description of the preferred embodiments with reference to the attached drawings.
Fig. 1 is a block diagram illustrating the construction of a vehicle-installed-type navigation system according to one embodiment to which the present invention is applied;
Fig. 2 is a block diagram illustrating the detailed construction of the navigation controller;
Fig. 3 is the relationship between map drawing data stored in a VRAM and a display image read by a reading control unit;
Fig. 4 is a diagram showing the contents of each sheet of map data;
Fig. 5 is a diagram illustrating the detailed contents of an intersection unit;
Fig. 6 is a diagram illustrating the detailed contents of an intersection record;
Fig. 7 is a flowchart illustrating an operation procedure for determining a language used by an end-user;
Fig. 8 is a flowchart illustrating an operation procedure for displaying a map image of the vicinity of the vehicle during driving;
Figs. 9A and 9B are diagrams illustrating example displays of the map image of the vicinity of the vehicle;
Fig. 10 is a flowchart illustrating an operation procedure for performing intersection guiding during route guiding;
Fig. 11 is a flowchart illustrating an operation procedure for a case in which the contents of a road guiding board captured during driving are read and guiding is performed based on the read contents;
Figs. 12A and 12B are example displays of a guiding image corresponding to the road guiding board;
Fig. 13 is a flowchart illustrating an operation procedure for a case in which the map data corresponding to the language used by the end-user is obtained by means of communication; and
Fig. 14 is a diagram illustrating variations of synonyms and notations according to a plurality of languages.

Hereinafter, a navigation system according to one embodiment to which the present invention is applied is described with reference to attached drawings.

### (1) Construction of Navigation System

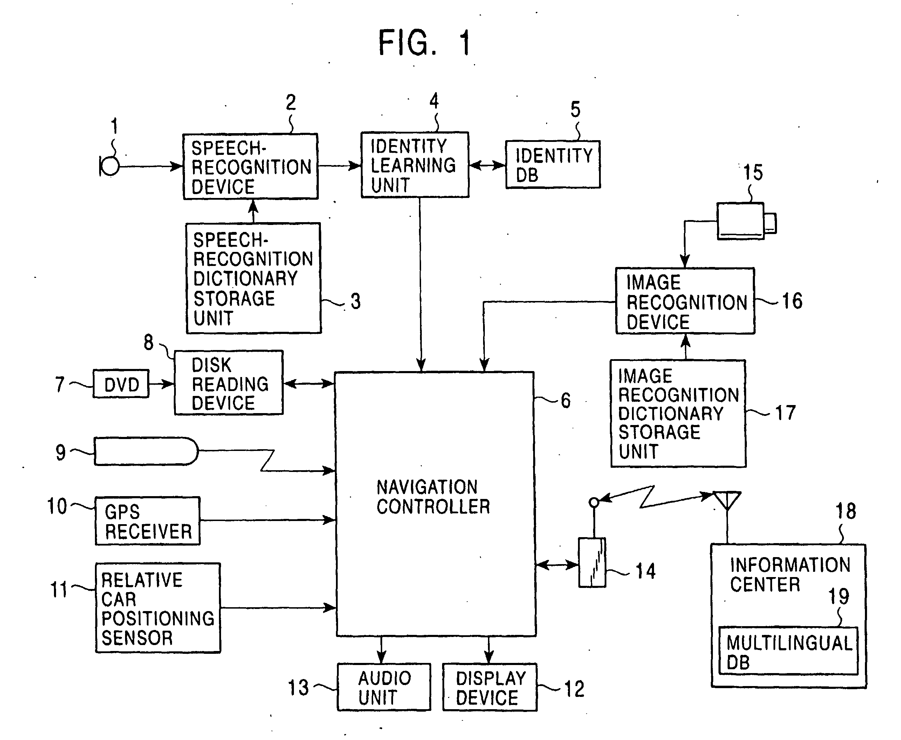

Fig. 1 is a diagram showing the construction of a vehicle-installed-type navigation system according to one embodiment to which the present invention is applied. The navigation system shown in Fig. 1 is constructed by including a microphone 1, a speech-recognition device 2, a speech-recognition dictionary storage unit 3, an identity-learning unit 4, an identity database (DB) 5, a navigation controller 6, a DVD (Digital Versatile Disk) 7, a disk-reading device 8, a remote control (RC) unit 9, a GPS (Global Positioning System) receiver 10, a relative car positioning sensor 11, a display device 12, an audio unit 13, a mobile phone 14, a camera 15, an image-recognition device 16, an image-recognition dictionary storage unit 17, and an information center 18.

The microphone 1 converts the speech spoken by the end-user into an electric signal and outputs the converted signal. The speech-recognition device 2 performs predetermined speech recognition by analyzing an audio signal output from the microphone 1 and specifies a character string corresponding to speech spoken by an end-user to determine the language the end-user uses based on this character string.

The speech-recognition dictionary storage unit 3 stores signal waveforms corresponding to standard speeches as a speech-recognition dictionary and, in addition, stores a dictionary indicating languages of the words corresponding to the signal waveforms. The dictionary is accommodated with a plurality of languages to be used.

The identity-learning unit 4 acquires the determination result concerning the language used by the end-user, which is output from the speech-recognition device 2 and learns the frequencies of occurrence of languages spoken by the user for each word. The learning result by the identity-learning unit 4 is stored in the identity DB 5. Whenever the speech is input, the identity-learning unit 4 acquires the language used corresponding to the speech and updates the contents of the identity DB 5.

The navigation controller 6 performs various types of controls in order to realize a predetermined navigation operation. A detailed construction of the navigation controller 6 is described below.

The DVD 7 stores various types of map data required for map displaying, route searching, and the like. The disk-reading device 8 has one or a plurality of DVDs 7 countable therein and reads the map data from any of the DVDs 7 under the control of the navigation controller 6. The disk to be mounted does not necessarily have to be DVD or CD. Alternatively, both DVD and CD may be selectively mountable.

The remote control unit 9 is provided with various operation keys such as a search key for instructing route searching, a route guiding mode key used for route-guiding mode setting, a destination input key, a left-right-up-down cursor key, a map reducing/enlarging key, and a setting key for setting an item on the display screen indicated by the cursor. An infrared signal is transmitted toward the navigation controller 6 in accordance with a key operation state.

The GPS receiver 10 receives electric waves transmitted from a plurality of GPS satellites, computes the absolute position and the direction of the vehicle by performing three-dimensional or two-dimensional position-measuring processing (computes the direction of the vehicle based on the current position of the vehicle and the position of the vehicle one sampling time AT before the current position), and outputs the results along with the measured time. The relative car positioning sensor 11 is provided with an angular sensor such as a vibration gyro for finding the vehicle rotation angle as a relative direction and a distance sensor which outputs one pulse per a predetermined distance traveled. Thus, the relative position and the direction of the vehicle are found.

. The display device 12 displays map information about the vicinity of the vehicle based on the drawing data output from the navigation controller 6; and superposes the guiding route, predetermined guiding images, and the like on this map and displays them. The audio unit 13 performs a speech output, such as intersection-guiding speech, based on speech data output from the navigation controller 6.

The mobile phone 14 is connected to the navigation controller 6 via an external data input/output unit provided in the main body of the phone. The mobile phone 14 is used for receiving various data from the information center 18 by transmitting and receiving the electric waves to and from a ground station of the vicinity of the vehicle. A cellular mobile phone, a PHS, or the like, which is widely available can be used as the mobile phone 14.

The camera 15, which is provided in a predetermined position in the vehicle, primarily captures road guiding boards ahead of the vehicle.

. The image-recognition device 16 performs predetermined image-recognition processing on the road guiding board image shot by the camera 15. The image-recognition device 16 recognizes the guiding contents including strings contained in this image to extract road shapes, place names, and the like. The image-recognition dictionary storage unit 17 stores, as an image-recognition dictionary, standard contrast image data required for causing the image-recognition device 16 to recognize the contents of road guiding boards.

The information center 18 transmits map data accommodated with a plurality of languages based on a transmission request from the navigation controller 6 and has a multilingual DB 19 therein. The multilingual DB 19 stores map data accommodated with a plurality of languages, such as English, German, French, and Japanese.

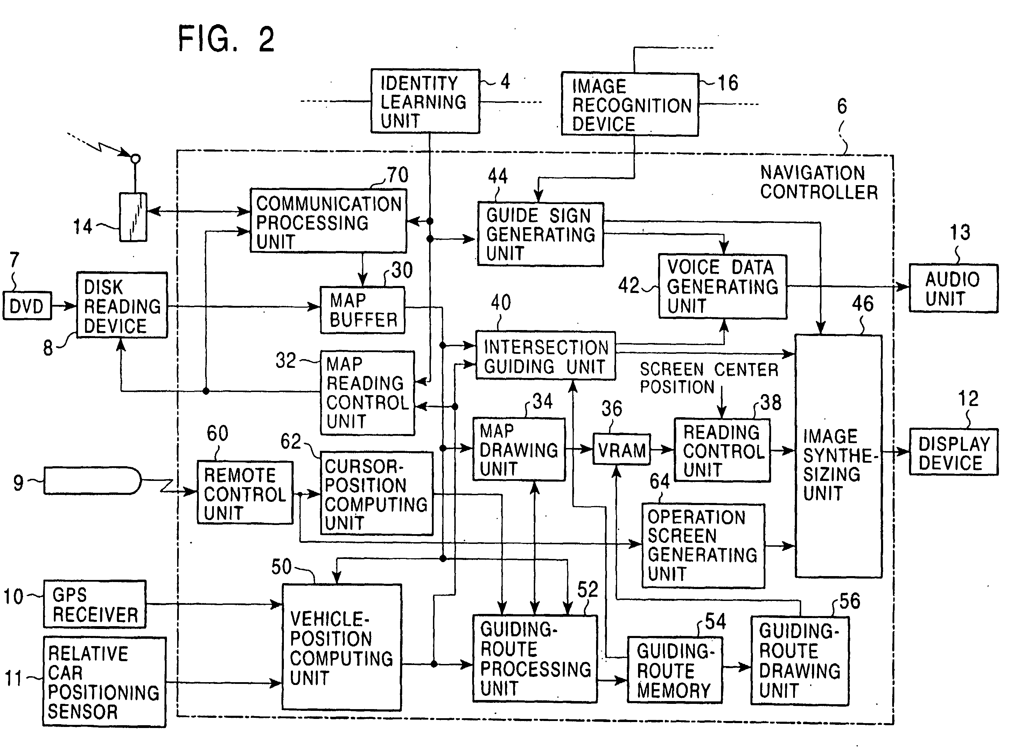

Fig. 2 is a diagram showing the detailed construction of the above navigation controller 6. The navigation controller 6 shown in the diagram is provided with a map buffer 30 for displaying a predetermined map image, enlarged views of an intersection, and the like on the display device 12 and for outputting intersection guiding speech; a map reading control unit 32; a map drawing unit 34; a VRAM 36; a reading control unit 38; an intersection guiding unit 40; a speech-data generating unit 42; a guide-sign generating unit 44; an image-synthesizing unit 46; a vehicle-position computing unit 50 for computing the position of the vehicle, for performing map-matching processing, route-searching processing, and route-guiding processing, and for displaying the results; a route-searching processing unit 52; a guiding-route memory 54; a guiding-route drawing unit 56; a remote control unit 60 for displaying various operation screens for the end-user and transmitting operation instructions from the remote control unit 9 to each component thereof; a cursor-position computing unit 62; an operation screen generating unit 64; and a communication processing unit 70 for transmitting various data to and receiving various data from the information center 18 via the mobile phone 14.

The map buffer 30 temporarily stores map data read from the DVD 7 by the disk-reading device 8. When the vehicle-position computing unit 50 computes the position of the vehicle, the map reading control unit 32 sends to the disk-reading device 8 a reading request for map data having a predetermined range including this vehicle position, and reads map data required for map displaying from the DVD 7 to store map data in the map buffer 30.

The map drawing unit 34 generates map drawing data required for displaying based on a drawing unit included in the map data stored in the map buffer 30. The generated map drawing data is stored in the VRAM 36. The reading control unit 38 reads one screen of map drawing data which corresponds to the vehicle position or reads the cursor position and outputs the data to the image-synthesizing unit 46.

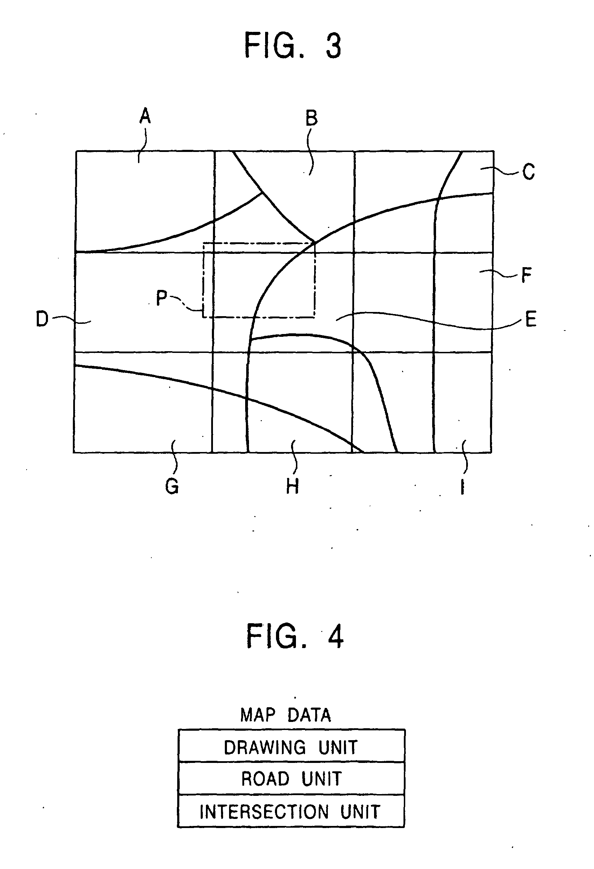

Fig. 3 is a diagram showing the relationship between the map drawing data stored in the VRAM 36 and the display image read by the reading control unit 38. In Fig. 3, regions A to I are each map images generated based on nine sheets of map data read from the map buffer 30. These nine sheets of map drawing data are stored in the VRAM 36. A region P is a predetermined region set based on the center position of the screen. While information is actually being displayed, a map image corresponding to the region P is read by the reading control unit 38 and is displayed on the screen of the display device 12 via the image-synthesizing unit 46.

Thus, scrolling of the map image occurs as the region P moves in accordance with the movement of the screen center position. When the screen center position departs from the center region E, nine sheets of map data which center on a region (any of A to D or F to I), including the screen center position at this time, are newly read and are stored in the map buffer 30.

The intersecting guiding unit 40 guides, using display images and speech, the intersection that the vehicle is approaching. During actual route guiding, when the vehicle moves within a predetermined distance from the intersection ahead, image data corresponding to the guide map (the enlarged view of the intersection and the traveling direction arrow) of this approaching intersection is generated while information concerning the traveling direction and the like are output to the speech-data generating unit 42. The speech-data generating unit 42 outputs speech data based on information concerning the traveling direction and the like input from the intersection guiding unit 40 to the audio unit 13 to guide the traveling direction and the like by speech.

The guide-sign generating unit 44 generates a predetermined guide-sign image based on the strings concerning the road shapes, the place names and the like output from the image-recognition device 16. The image-synthesizing unit 46 performs image synthesizing to output synthesized data to the display device 12 by superposing the map drawing data read from the VRAM 36 and image data output from each of the guide-sign generating unit 44, the guiding-route drawing unit 56, and the operation screen generating unit 64. When drawing data corresponding to the intersection guide map such as the enlarged view of the intersection is output from the intersection-guiding unit 40, the image-synthesizing unit 46 outputs this drawing data on the display device 12.

The vehicle-position computing unit 50 computes the position of the vehicle based on the data received from each of the GPS receiver 10 and the relative car positioning sensor 11 while performing map-matching processing to modify the vehicle position in a case in which the computed vehicle position is located on a road which is not in the map data. The route-searching processing 52 searches for a traveling route establishing a connection between a predetermined destination position and a starting position under a predetermined condition. The guiding route having the least cost is determined by various conditions such as shortest distance or shortest time. As a typical route-searching method, a breadth-first search (BFS) method or a Dijkstra's algorithm has been known. The set guiding route is stored in the guiding-route memory 54.

At this point, the guiding-route drawing unit 56 selects what is included in the map area drawn in the VRAM 36 from among the guiding-route data which is set by the route-searching processing unit 52 and which is stored in the guiding-route memory 54. Thereafter, the guiding-route drawing unit 56 draws the guiding route in bold lines, superposed on the map image in a predetermined color.

The speech-recognition device 2 and the speech-recognition dictionary storage unit 3 correspond to speech-recognition means; the identity-learning unit 4 and the identity DB 5 correspond to language determining means; and the navigation controller 6, the DVD 7, the disk-reading device 8, the GPS receiver 10, the relative car positioning sensor 11, the display device 12, and the audio unit 13 correspond to navigation processing means. The DVD 7, the disk-reading device 8, the GPS receiver 10, the relative car positioning sensor 11, the display device 12, the map buffer 30, the map reading control unit 32, the map drawing unit 34, the VRAM 36, the reading control unit 38, and the vehicle-position computing unit 50 correspond to map displaying means; the route-searching processing unit 52 corresponds to route searching means; the guiding-route memory 54, the intersection guiding unit 40, and the speech-data generating unit 42 correspond to route-guiding means. The image-recognition device 16 and the image-recognition dictionary storage unit 17 correspond to image-recognition means; the guide-sign generating unit 44 and the speech-data generating unit 42 correspond to guiding means; and the mobile phone 14 and the communication processing unit 70 correspond to transmission-request means and information-receiving means.

### (2) Detailed Contents of Map Data

Next, the map data recorded on the DVD 7 is described in detail. The map data recorded on the DVD 7 employs, as a unit, a rectangular sheet defined by predetermined longitude and latitude. Each sheet of map data can be identified and read by specifying the sheet number. Fig. 4 is a diagram showing the content of the map data for each sheet. As shown in Fig. 4, the map data for each sheet includes (1) the drawing unit having various data required for map displaying, (2) a road unit having data required for various processing such as map matching, route searching, and route guiding, and (3) an intersection unit having detailed data concerning intersections and the like.

The above drawing unit includes background layer data for displaying buildings, rivers, and the like and character layer data for displaying the names of cities, towns, and villages, road names, and the like. This character layer data is provided for each language. When the language used is specified, the character layer corresponding to this language used is read.

In the above road unit, a connection between two arbitrary points on the road is called a link, and a neighboring point establishing a connection between two links or more is called a node. The road unit includes a unit header for identifying this as the road unit, a connection node table for storing detailed data of all nodes, and a link table storing detailed data of the link specified by two neighboring nodes.

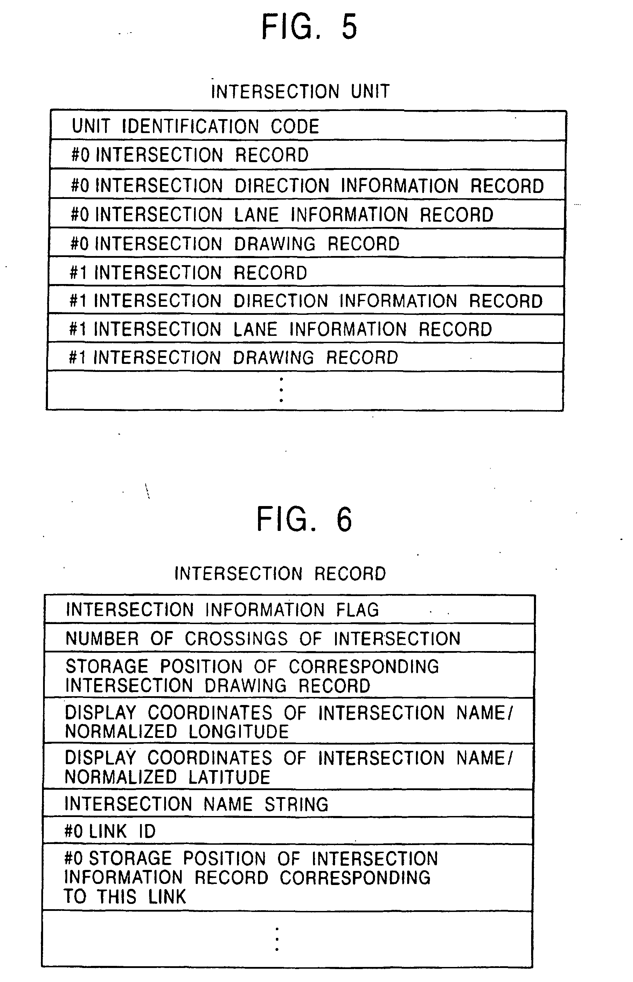

Fig. 5 is a diagram showing detailed contents of the intersection unit. As shown in Fig. 5, for each intersection, the intersection unit stores an intersection record including data concerning the intersection itself, an intersection direction information record including data concerning the destination of a road extending from the intersection, and an intersection lane information record including data concerning each lane of the roads constituting the intersection.

As shown in Fig. 6, for each of existing intersections, the intersection record includes:
a. "Intersection Information Flag" including a signal flag that indicates whether a traffic light exists at this intersection;
b. "Number of Crossings of Intersection" indicating the number of crossings of this intersection;
c. the coordinates of the intersection name in a case in which the intersection name is displayed;
d. the intersection name string to be displayed; and
e. the link ID of each link constituting this intersection and the storage position of the intersection direction information record corresponding to this link (for each of the crossings of the intersection).

The above intersection unit data is provided for each language where the contents are changed in accordance with the language used by the end-user. For example, the intersection drawing records and the intersection name strings and the like in the intersection records are provided in each language. When the language used by the end-user is specified, the contents corresponding to this language are read

### . (3) Operation of Navigation System

Next, the operation of the navigation system according to the present embodiment is categorized into cases and each case is described.

### (3-1) Determining Operation of Language Used

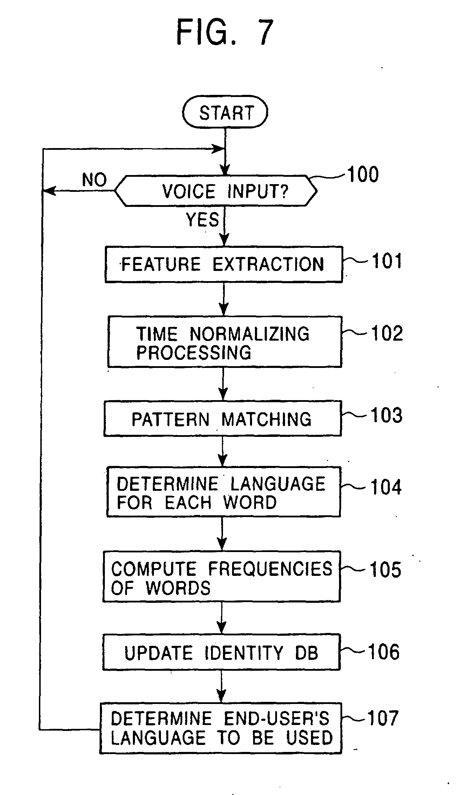

Fig. 7 is a flowchart showing an operation sequence for determining the language used by the end-user. The operation sequence in a case in which, by recording the speech of the end-user (a driver or another accompanying person) using, for example, the microphone 1 provided in a predetermined position inside the vehicle, this language used by the end-user is determined, is shown.

The speech-recognition device 2 determines whether speech is input to the microphone 1 (step 100). When the speech of the end-user is input, the feature of this speech is extracted (step 101). During the speech spoken by end-users, the durations of one word of the speech are different from each other. Hence, the speech-recognition device 2 performs normalization processing on the extracted feature with respect to the time base (step 102). Thereafter, the speech-recognition device 2 performs pattern matching based on information contained in a dictionary stored in the speech-recognition dictionary storage unit 3 (step 103) and the language for each word is determined (step 104).

Next, the identity-learning unit 4 counts the number of occurrence of a language for each word determined by the speech-recognition device 2 and computes the frequencies of occurrence of the languages (step 105). The contents of the identity DB 5 are updated (step 106). For example, when the end-user speaks the same word several times, the count of occurrence of the language of the word is increased.

Next, the identity-learning unit 4 determines the language used by the end-user based on the frequency of occurrence of each of the languages stored in the identity DB 5 (step 107). For example, in a case in which a Japanese person speaks Japanese, imported words using the KATAKANA notation that phonetically imitate English synonyms are spoken during a conversation. Although these imported words are determined as English, occurrence of native Japanese is more frequent than occurrence of the imported words during a common conversation. Accordingly, the frequency distributions of the languages stored in the identity DB 5 show that Japanese is the majority in the distribution. During determining process of the language used at step 107, the language used is determined as "Japanese".

In this manner, the navigation system according to the present embodiment can determine the language for every word by performing speech-recognition processing accommodated with a plurality of languages on the speech of the end-user. The language used by the end-user can be easily determined by computing the frequencies of occurrence of the languages for each word and examining the language having the highest frequency of occurrence.

In the above embodiment, the language used is determined for a single end-user or without considering whether the number of end-users is one or more. The language used may be determined for each of the end-users by causing the speech-recognition device 2 to extract the feature from each of the different end-users and storing data of the identity DB 5 according to the end-user. In this case, the language used by each of the end-users can be accurately determined.

### (3-2) Map Displaying Operation in Vicinity of Vehicle

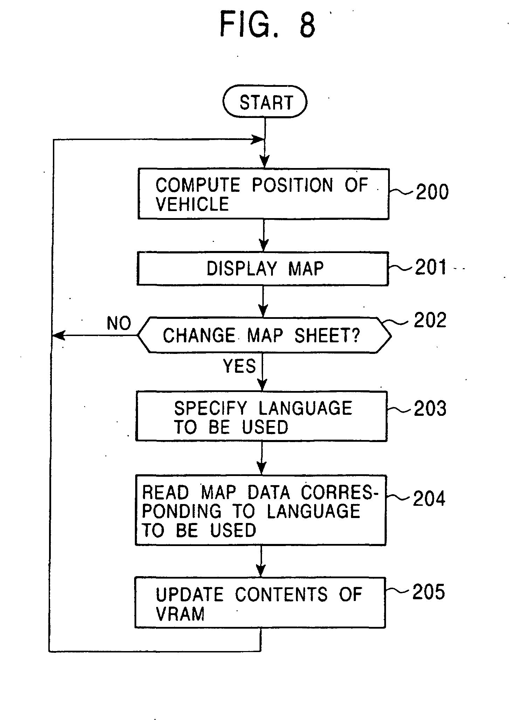

Fig. 8 is a flowchart showing an operation procedure for displaying a map image of the vicinity of the vehicle during driving. The vehicle-position computing unit 50 computes the current position of the vehicle based on the output of the GPS receiver 10 and the relative car positioning sensor 11 (step 200). The current position of this vehicle is input into the reading control unit 38 as the screen center position. The reading control unit 38 reads a predetermined range of map drawing data including the current position of the vehicle from the VRAM 36 to show the read data on the display device 12 (step 201). When the current position of the vehicle moves, the range of the map drawing data read from the VRAM 36 is changed accordingly. Therefore, the map image of the vicinity of the vehicle displayed on the display device 12 is scrolled while the vehicle travels.

The map reading control unit 32 determines whether a new sheet of map data must be read from the DVD 7 whenever the current position of the vehicle changes (step 202). As is described with Fig. 3, when the region P moves in accordance with traveling of the vehicle, map data corresponding to sheets provided in the traveling direction must be sequentially read.

When a new sheet of map data has to be read, an affirmative determination is made in the determination at step 202. Thereafter, the map reading control unit 32 specifies the language used by the end-user based on the determination result of the identity-learning unit 4 (step 203). The map reading control unit 32 requests the disk-reading device 8 to read map data corresponding to this specified language used. The disk-reading device 8 reads map data from the DVD 7 in accordance with this request (step 204). In a part which depends on the language used (the part provided for each language used) among the map data read in this manner, only the map data corresponding to the specified language used is a target to be read. For example, only data corresponding to the language used is read from the character string layer included in the drawing unit, the intersection drawing record included in the intersection unit, and the like, and then are stored in the map buffer 30.

When the contents of the map data stored in the map buffer 30 are updated, the map-drawing unit 34 generates map drawing data based on this updated map data to update the contents of the VRAM 36 (step 205). Thereafter, the process returns to the above step 200 and repeats processing.

When the navigation system according to the present embodiment reads a new sheet of map data during traveling of the vehicle, the map data corresponding to the language used is read. Accordingly, when the map image of the vicinity of the vehicle is displayed, since the characters corresponding to the language used can be used, the end-user who sees the display can easily understand the display contents. In particular, since determination of the language used is automatically performed using speech-recognition processing, there is no need to switch a language used and the like, which can improve the operationality

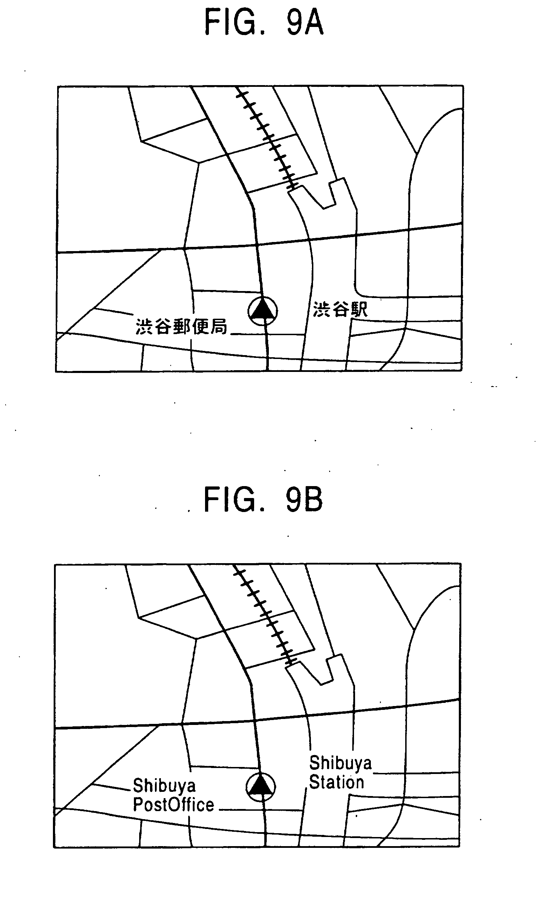

Figs. 9A and 9B are diagrams showing example displays of the map image of the vicinity of the vehicle. The example display shown in Fig. 9A corresponds to a case in which the end-user speaks Japanese. The character string layer included in the drawing unit corresponding to Japanese is used, which causes the notations of the place names and the facility names to be Japanese. An example display shown in Fig. 9B corresponds to a case in which the end-user speaks English. The character string layer included in the drawing unit corresponding to English is used, which causes the notations of the place names and the facility names to be English. Since the same background layer data is used regardless of the language used, the two example displays shown in Figs. 9A and 9B are equal except the characters.

### (3-3) Intersection Guiding Operation in Route Guiding

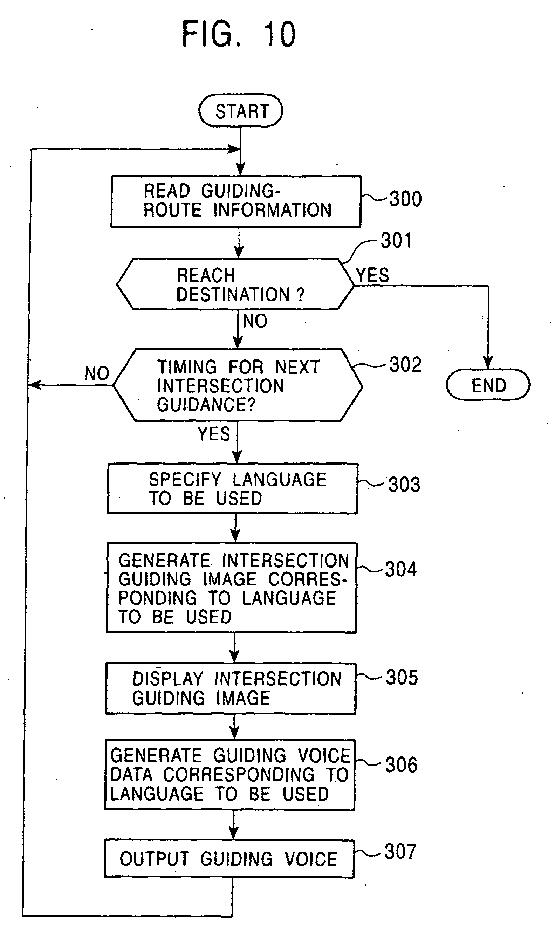

Fig. 10 is a diagram showing an operation procedure for performing an intersection-guiding operation in route guiding. The route-searching processing unit 52 performs searching processing on the route established between a predetermined starting position and the destination position. The route information is stored as the searching result in the guiding route memory 54.

The intersection-guiding unit 40 reads the route information stored in the guiding route memory 54 (step 300) and determines whether the vehicle reaches the destination by comparing the coordinates of the destination with the coordinates of the current position of the vehicle computed by the vehicle position computing unit 50 (step 301). When the vehicle reaches the destination, the intersection guiding operation in a sequence of route guiding is completed.

. When the vehicle does not reach the destination, the intersection-guiding unit 40 determines whether it is guide timing for a next intersection (step 302). For example, when the guide timing is when the distance to a next right-turn/left-turn intersection reaches a predetermined value, otherwise, a negative determination is made in determination at step 302. The process returns to step 300 and repeats processing.

When it is a guide timing for the intersection, the intersection guiding unit 40 specifies the language used by the end-user determined by the identity learning unit 4 (step 303), generates the intersection guiding image corresponding to this specified language used (step 304), and shows the image on the display device 12 (step 305). The intersection guiding unit 40 requests the speech-data generating unit 42 to generate speech guiding data corresponding to this specified language used. The speech-data generating unit 42 generates speech data corresponding to the language used by the end-user and inputs the generated data into the audio unit 13 (step 306). The intersection guiding speech using the language used by the end-user is output from the audio unit 13 (step 307). Thereafter, the process returns to step 300 and repeats the processing.

Thus, the navigation system according to the present embodiment performs intersection guiding by means of the guiding image and guiding speech using the language used by the end-user during route guiding. Therefore, the end-user can understand the contents of the intersection guiding regardless of the language used.

### (3-4) Operation in Case in Which Contents of Road Guiding Board Is Read Using Image-Recognition Processing

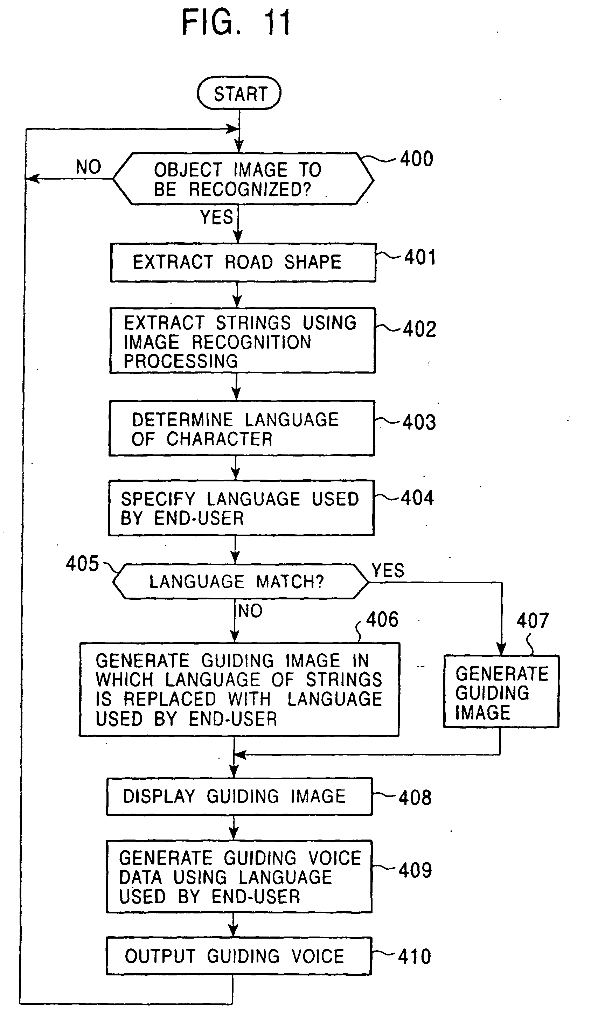

Fig. 11 is a flowchart showing an operation procedure for a case in which the contents of the road guiding board captured during driving is read and guiding is performed based on the contents.

The image-recognition device 16 determines whether an image to be recognized is captured by the camera 15 during driving (step 400). When the image to be recognized is input from the camera 15, an affirmative determination is made and the road shape contained in the road guiding board is extracted (step 401) and character strings such as place names are extracted (step 402). In a case in which there is no image to be recognized, a negative determination is made at step 400 and the process repeatedly determines whether the image to be recognized is captured. The road guiding board normally includes the character strings of place names along with a figure representing the road on a blue or green rectangular plate. For example, the image-recognition device 16 obtains the object that is satisfied with these conditions and determines this object as the image to be recognized.

The image-recognition device 16 performs matching determination by comparing the extracted string image with the character images registered in the image-recognition dictionary storage unit 16 to determine the language of the characters (step 403).

Next, the guide-sign generating unit 44 specifies the language used by the end-user determined by the identity-learning unit 4 (step 404) and determines whether this specified language used and the language of the strings contained in the road guiding board match (step 405). When mismatch occurs, a negative determination is made. Thereafter, the guide-sign generating unit 44 generates a guiding image obtained by replacing the language of the strings contained in the road guiding board with the language used by the end-user (step 406) and displays the generated image on the display device 12 (step 408). When the language used by the end-user and the language of the strings contained in the road guiding board match, the guiding image is generated without replacing the language of the strings (step 407). In this case, the original image of the road guiding board obtained by the image-recognition device 16 may continue to be displayed or the contents of the recognized strings may be redisplayed with a predetermined font.

The guide-sign generating unit 44 requests the speech-data generating unit 42 to generate the guiding speech data explaining the contents of the road guiding board using the language used by the end-user. The speech-data generating unit 42 generates the speech data corresponding to the language used by the end-user in accordance with this request and inputs the generated speech data into the audio unit 13 (step 409) and the intersection guiding speech is output from the audio unit 13 using the language used by the end-user (step 410). This guiding speech includes, for example, the road shape and the place name corresponding to the character string are contained in this guiding speech. Thereafter, the process returns to step 400 and repeats the processing.

Thus, the navigation system according to the present embodiment can determine the language of the strings contained in this road guiding board by capturing the road-guiding board using the camera 15 and performing image-recognition processing on the contents of the road guiding board. When this language is different from the language used by the end-user, the guiding image display or the guiding speech output corresponding to the road guiding board is performed using the language used by the end-user. Therefore, the end-user can easily understand the contents of the road-guiding board.

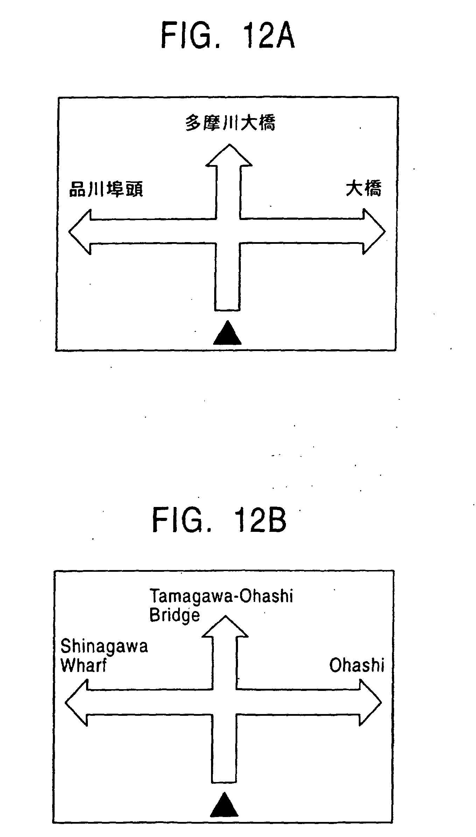

Figs. 12A and 12B are diagrams showing example displays of the guiding image corresponding to the road guiding board. Fig. 12A shows an example display in a case in which Japanese character strings are contained in the road guiding board and the language used by an end-user is Japanese. Fig. 12B shows an example display in a case in which English strings are contained in the road guiding board and the language used by an end-user is English. In the image shown in Fig. 12B, the language of the strings contained in the image shown in Fig. 12A is changed from Japanese to English, so that even the end-user who is good at English and not good at Japanese can easily understand the contents of the road guiding board. When the language of strings contained in the road-guiding board is caused to be matched with the language used by the end-user, since what kind of local language notations are used cannot be known, the string using the local language notation may be also shown so as to be adjacent to the replaced place name or the like.

### (3-5) Operation of Case in Which Map Data Corresponding to Language Used By End-User Is Obtained by Means of Communication

The amount of data on the place names, the facility names, and the like are enormous. It is not easy to always store such data accommodated with many languages in the DVD 7. In addition, end-users who use the navigation system do not necessarily use many languages. Accordingly, with respect to data concerning a plurality of languages to be used, the minimum data required for specifying the language used is stored in the DVD 7. The otherwise less frequently used data, such as place names, facility names, and the like, are preferably sent from the information center 18 whenever they are used.

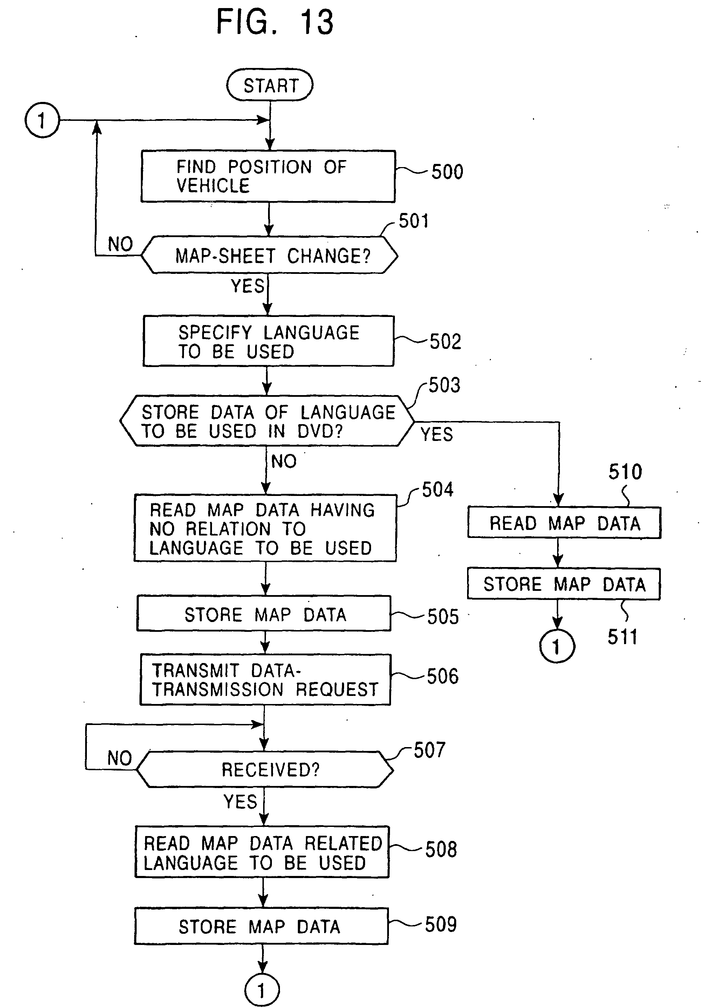

. Fig. 13 is a flowchart showing an operation procedure for a case in which map data corresponding to the language used by the end-user is obtained by means of communication. When the vehicle-position computing unit 50 computes the current position of the vehicle (step 500), the map-reading control unit 32 determines whether a new sheet of map data has to be read from the DVD 7 (step 501). This determination is performed in the same manner as in the determination operation at step 202 shown in Fig. 8.

When a new sheet of map data has to be read, an affirmative determination is made at step 501. Thereafter, the map reading control unit 32 specifies the language used by the end-user based on the determination result by the identity-learning unit 4 (step 502) and determines wether map data corresponding to this language used is stored in the DVD 7 (step 503). For example, the DVD 7 contains map data corresponding to Japanese and English and does not contain map data corresponding to the other languages.

When the specified language used is neither Japanese nor English, a negative determination is made in determination at step 503. Thereafter, the map-reading control unit 32 sends, to the disk-reading device 8, a request for reading map data independent of the language used. The disk-reading device 8 reads map data read from the DVD 7 in accordance with this request (step 504) and stores this read map data in the map buffer 30 (step 505). This map data does not include the character layer data and the like contained in the drawing unit.

Next, the communication-processing unit 70 sends, to the information center 18, map data dependent on the language used by the end-user via the mobile phone 14 (step 506). Thereafter, the communication-processing unit 70 monitors whether the map data corresponding to this transmission request is received (step 507). When the map data is received, this map data is read in the receiving order (step 508) and is stored in the map buffer 30 (step 509).

When the language used specified in processing at step 502 is Japanese or English, since all map data required for this language are stored on the DVD 7, an affirmative determination is made. Accordingly, the normal map data is read (step 510) and is stored in the map buffer 30 (step 511).

Thus, in the navigation system according to the present embodiment, map data of less-frequently-used languages are stored in the multilingual DB 19 of the information center 18. When this map data is required, a transmission request is sent, so that the necessary map data can be obtained using communication. Therefore, since the navigation system needs only to be provided with information required for determining the language used, the amount of storage data corresponding to each language used can be reduced. Since the storage amount of the DVD 7 can be reduced, cost cutting can be achieved. In addition, since the amount of data that can be stored is restricted, the number of languages to be used that are target to be determined can be increased by decreasing the amount of data for each of the languages that must be constantly stored.

## Claims

1. A navigation system comprising:
speech-recognition means (2, 3) for performing speech-recognition processing on input speech; **characterized by**
language determining means (4, 5) for determining a language used by a speaker of this input speech based on the contents of said input speech recognized by said speech-recognition means (2, 3); and
navigation processing means (6, 7, 8, 10, 11, 12, 13) for performing a navigation operation corresponding to said language determined by said language determining means(4, 5).

2. A navigation system according to Claim 1, **characterized in that**:
said navigation processing means (6, 7, 8, 10, 11, 12, 13) include map displaying means (7, 8, 10, 11, 12, 30, 32, 34, 36, 38, 50) for displaying map information of the vicinity of a vehicle; and
said map displaying means (7, 8, 10, 11, 12, 30, 32, 34, 36, 38, 50) use said language determined by said language determining means (4, 5) as a language of characters included in said map information displayed.

3. A navigation system according to Claim 1 or 2, **characterized in that**:
said navigation processing means (6, 7, 8, 10, 11, 12, 13) include route-searching means (52) for searching for a route to the destination and route-guiding means (40, 42, 54) for guiding the vehicle by means of guiding speech along the route set using searching processing by said route-searching means(52); and
said route-guiding means (40, 42, 54) generate said guiding speech corresponding to said language determined by said language determining means (4, 5).

4. A navigation system according to any of Claims 1 to 3, **characterized in that**:
said language determining means (4, 5) examines the language corresponding to every word contained in said input speech and determines the language with the majority in this examined result as said language used.

5. A navigation system according to Claim 4, **characterized in that** said language determining means (4, 5) includes a database for storing the feature extracted during the examination for each user and said language used is determined for each user.

6. A navigation system according to any of Claims 1 to 5, **characterized in that**:
image-recognition means (16, 17) are further provided in which an image of a captured predetermined road guiding board is input and the contents of the characters included in this image are determined; and
said navigation processing means (6, 7, 8, 10, 11, 12, 13) includes guiding means (42, 44) for at least one of displaying and speech outputting by replacing the characters, whose contents are determined by said image-recognition means (16, 17), with other characters which are in said language determined by said language determining means (4, 5 and which have the same meaning as said characters.

7. A navigation system according to any of Claims 1 to 6, **characterized by** further comprising:
transmission requesting means (14, 70) for requesting transmission of detailed information concerning said language determined by said language determining means (4, 5); and
information receiving means (14, 70) for receiving said detailed information transmitted from outside in accordance with the request by said transmission requesting means (14, 70).

## Patentansprüche

1. Navigationssystem, aufweisend:
eine Spracherkennungseinrichtung (2, 3) zum Durchführen von Spracherkennungsverarbeitung von einer Spracheingabe; **gekennzeichnet durch**
eine Sprachbestimmungseinrichtung (4, 5) zum Bestimmen einer Sprache, welche **durch** einen Sprecher der Spracheingabe verwendet wird, basierend auf dem Inhalt der von der Spracherkennungseinrichtung (2, 3) erkannten Spracheingabe; und
eine Navigationsberechnungseinrichtung (6, 7, 8, 10, 11, 12, 13) zum Durchführen eines Navigationsvorgangs, welche mit der Sprache korrespondiert, welche **durch** die Sprachbestimmungseinrichtung (4, 5) bestimmt wurde.

2. Navigationssystem nach Anspruch 1, **dadurch gekennzeichnet, dass**
die Navigationsberechnungseinrichtung (6, 7, 8, 10, 11, 12, 13) eine Kartenanzeigevorrichtung (7, 8, 10, 11, 12, 30, 32, 34, 36, 38, 50) zum Anzeigen von Karteninformation aus der Umgebung eines Fahrzeugs aufweist; und dass die Kartenanzeigevorrichtung (7, 8, 10, 11, 12, 30, 32, 34, 36, 38, 50) die Sprache, welche durch die Sprachbestimmungseinrichtung (4, 5) bestimmt wurde, als eine Sprache aus Zeichen verwendet, welche in der angezeigten Karteninformation umfasst sind.

3. Navigationssystem nach Anspruch 1 oder 2, **dadurch gekennzeichnet, dass**
die Navigationsberechnungsvorrichtung (6, 7, 8, 10, 11, 12, 13) eine Routen-Sucheinrichtung (52) zum Suchen einer Route zu dem Ziel und eine Routen-Führungseinrichtung (40, 42, 54) zum Führen des Fahrzeugs durch Sprachführung entlang der Route aufweist, welche unter Verwendung der Suchberechnung durch die Routensucheinrichtung (52) festgesetzt wurde; und dass
die Routen-Führungseinrichtung (40, 42, 54) die Sprachführung korrespondierend zu der Sprache generiert, welche durch die Sprachbestimmungseinrichtung (4, 5) bestimmt wurde.

4. Navigationssystem entsprechend einem der Ansprüche 1 bis 3, **dadurch gekennzeichnet dass**,
die Sprachbestimmungseinrichtung (4, 5) die Sprache korrespondierend zu jedem Wort untersucht, welches in der Spracheingabe enthalten ist, und die Sprache mit der Mehrheit in diesem Ergebnis als verwendete Sprache bestimmt.

5. Navigationssystem nach Anspruch 4, **dadurch gekennzeichnet, dass** die Sprachbestimmungseinrichtung (4, 5) eine Datenbank zum Speichern des während der Untersuchung extrahierten Merkmale für jeden Anwender, und dass die verwendete Sprache für jeden Anwender bestimmt wird.

6. Navigationssystem nach einem der Ansprüche 1 bis 5, **dadurch gekennzeichnet, dass** eine Bilderkennungseinrichtung (16, 17) außerdem vorgesehen ist, in welcher ein Bild eines aufgenommenen vorher bestimmten Straßenwegweiserschildes eingegeben wird und der Inhalt der in diesem Bild enthaltenen Zeichen bestimmt wird; und
dass die Navigationsberechnungseinrichtung (6, 7, 8, 10, 11, 12, 13) eine Führungseinrichtung (42, 44) umfasst für mindestens eines von Anzeigen und in Sprache Ausgeben durch Ersetzen der Zeichen, deren Inhalt durch die Bilderkennungseinrichtung (16, 17) bestimmt wurde, mit anderen Zeichen, welche in der Sprache sind, welche durch die Sprachbestimmungseinrichtung (4, 5) bestimmt wurde, und welche die gleiche Bedeutung wie die genannten Zeichen haben.

7. Navigationssystem nach einem der Ansprüche 1 bis 6, **dadurch gekennzeichnet, dass** es ferner aufweist:
eine Übertragungs-Anfragevorrichtung (14, 70) zum Anfragen der Übertragung von detaillierter Information bezüglich der Sprache, welche durch die Sprachbestimmungsvorrichtung (4, 5) bestimmt wurde; und
eine Informationsempfangseinrichtung (14, 70) zum Empfangen von der detaillierten Information, welche von außen gemäß der Anfrage durch die Übertragungsanfragevorrichtung übertragen wurde.

## Revendications

1. Système de navigation comprenant :
des moyens de reconnaissance vocale (2, 3) permettant d'effectuer un traitement de reconnaissance vocale sur des paroles entrées ;
**caractérisé par**
des moyens de détermination de langue (4, 5) permettant de déterminer la langue utilisée par la personne qui prononce les paroles entrées, en se fondant sur le contenu desdites paroles entrées reconnues grâce aux dits moyens de reconnaissance vocale (2, 3) ; et
des moyens de traitement de navigation (6, 7, 8, 10, 11, 12, 13) permettant d'effectuer une opération de navigation correspondant à ladite langue déterminée par lesdits moyens de détermination de langue (4, 5).

2. Système de navigation selon la revendication 1, **caractérisé en ce que** :
lesdits moyens de traitement de navigation (6, 7, 8, 10, 11, 12, 13) incluent des moyens d'affichage de carte (7, 8, 10, 11, 12, 30, 32, 34, 36, 38, 50) permettant d'afficher des informations relatives à une carte de la proximité d'un véhicule ; et
lesdits moyens d'affichage de carte (7, 8, 10, 11, 12, 30, 32, 34, 36, 38, 50) utilisent ladite langue déterminée par lesdits moyens de détermination de langue (4, 5) comme langue des caractères inclus dans lesdites informations relatives à une carte qui sont affichées.

3. Système de navigation selon la revendication 1 ou 2, **caractérisé en ce que** :
lesdits moyens de traitement de navigation (6, 7, 8, 10, 11, 12, 13) incluent des moyens de recherche d'itinéraire (52) permettant de rechercher un itinéraire vers la destination et des moyens de guidage d'itinéraire (40, 42, 54) permettant de guider le véhicule au moyen de paroles de guidage le long de l'itinéraire défini en utilisant le traitement de recherche grâce auxdits moyens de recherche d'itinéraire (52) ; et
lesdits moyens de guidage d'itinéraire (40, 42, 54) génèrent lesdites paroles de guidage correspondant à ladite langue déterminée par lesdits moyens de détermination de langue (4, 5).

4. Système de navigation selon l'une quelconque des revendications 1 à 3, **caractérisé en ce que** lesdits moyens de détermination de langue (4, 5) examinent la langue correspondant à chaque mot contenu dans lesdites paroles entrées et déterminent la langue, la plus grande partie de ce résultat examiné étant considérée comme étant ladite langue utilisée.

5. Système de navigation selon la revendication 4, **caractérisé en ce que** lesdits moyens de détermination de langue (4, 5) incluent une base de données pour stocker la caractéristique extraite au cours de l'examen pour chaque utilisateur, et ladite langue utilisée est déterminée pour chaque utilisateur.

6. Système de navigation selon l'une quelconque des revendications 1 à 5, caractérisé en ce :
des moyens de reconnaissance d'image (16, 17) sont en outre prévus, dans lesquels une image d'une carte de guidage d'itinéraire prédéterminé saisie est entrée, et le contenu des caractères inclus dans cette image est déterminé ; et
lesdits moyens de traitement de navigation (6, 7, 8, 10, 11, 12, 13) incluent des moyens de guidage (42, 44) permettant au moins l'un des affichage et sortie vocale en remplaçant les caractères, dont le contenu est déterminé par lesdits moyens de reconnaissance d'image (16, 17), par d'autres caractères qui sont dans ladite langue déterminée par lesdits moyens de détermination de langue (4, 5) et qui ont la même signification que lesdits caractères.

7. Système de navigation selon l'une quelconque des revendications 1 à 6, **caractérisé en ce qu'**il comprend, en outre :
des moyens de demande de transmission (14, 70) permettant de demander la transmission d'informations détaillées concernant ladite langue déterminée par lesdits moyens de détermination de langue (4, 5) ; et
des moyens de réception d'informations (14, 70) permettant de recevoir lesdites informations détaillées transmises depuis l'extérieur en fonction de la demande effectuée par lesdits moyens de demande de transmission (14, 70).
